# DEMANDE DE BREVET EUROPEEN

(11) **EP 1 676 483 A2**
(43) Date de publication de la demande: **05.07.2006**
(21) Numéro de dépôt: 06008465.4
(22) Date de dépôt: 13.07.2001
(51) Int. Cl.: A23B 5/005, A23L 1/32

(54) **Procédé de pasteurisation d'un mélange liquide à base d'oeuf**

(30) Priorité: 13.07.2000 FR 0009184
(62) Demande divisionnaire de: 01420160.2
(71) Demandeur: Atria, 69610 Souzy (FR)
(72) Inventeur: Cherblanc, Frank, 69670 Vaugneray (FR); Cherblanc, Eric, 69670 Thurins (FR)
(74) Mandataire: Guerre, Dominique

(57) **Abrégé**

Procédé de pasteurisation d'un mélange, essentiellement liquide, comprenant au moins du blanc d'oeuf, selon lequel on chauffe ledit mélange à une température de pasteurisation comprise entre 67 et 71,5°C, si le mélange est non sucré, et à une température de pasteurisation comprise entre 67 et 85°C, si le mélange est sucré, pendant une durée suffisante, permettant d'obtenir une valeur pasteurisatrice au moins égale à 100 ; et mélange obtenu.

## Description

L'invention concerne un procédé de pasteurisation d'un mélange essentiellement liquide, à base de blanc d'oeuf, ou d'oeuf entier, c'est à dire blanc et jaune d'oeuf. Elle se rapporte également au mélange susceptible d'être obtenu par ledit procédé. Elle a enfin pour objet différentes utilisations dudit mélange dans le domaine alimentaire, en particulier comme garniture de fond de tarte, préparation pour flancs, pour soufflé, ou analogues, prêts à cuire.

De façon connue, les garnitures de tartes sucrées ou salées sont constituées d'un mélange d'oeuf et de lait ou de crème auquel on ajoute différents ingrédients, dont le choix est fonction de la nature de la tarte.

Toutefois, la présence d'oeuf, et de blanc d'oeuf en particulier, mais également d'un certain nombre d'ingrédients au sein de la garniture, favorise le développement rapide de micro-organismes, au cours du temps, susceptibles de rendre le produit inconsommable.

Pour résoudre ce problème, on pasteurise la composition liquide à base d'oeuf avant ou après y avoir ajouté les autres ingrédients, puis on conserve la garniture ainsi traitée, à basse température, en froid positif de l'ordre de 3°C.

Cependant, on est confronté, lors du processus de pasteurisation, à des problèmes de dénaturation de l'oeuf, notamment par coagulation, ou de prise en masse du mélange, qui apparaissent avec l'augmentation de la température et/ou la durée du chauffage.

L'efficacité de la pasteurisation est caractérisée par une valeur pasteurisatrice (Vp) calculée en fonction de la température et de la durée du chauffage. Cette norme, parfaitement connue de l'homme du métier reflète ainsi la plus ou moins grande capacité de conservation du produit. Pour l'essentiel, plus la valeur pasteurisatrice (Vp) est élevée et plus la durée de conservation est longue.

Le document GB-A-1 035 676 décrit un procédé de pasteurisation d' oeuf seul, consistant à chauffer l' oeuf à une température comprise entre 64,4 et 68,3°C pendant un temps compris entre 2 minutes et demi et 5 minutes, puis à refroidir le produit obtenu jusqu'à une température de 4°C. Dans ces conditions, on n'observe pas de phénomène de coagulation de l'oeuf, mais elles conduisent à une Vp d'une valeur n'excédant pas 3,3 (durée de chauffage 5 minutes à une température de 68,3°C), ce qui correspond à une durée de conservation du produit limitée. Au delà des durées prescrites, on constate que l'oeuf prend en masse.

Pour résoudre ce problème, le document FR-A-2 720 602 décrit un procédé de pasteurisation de produits alimentaires liquides à base d'oeuf selon lequel la température de pasteurisation est maintenue à 72,2°C pendant 60 minutes, ou 75°C pendant 31 minutes, permettant ainsi d'obtenir une valeur pasteurisatrice proche de 100, sans aucune dénaturation de l'oeuf ou prise en masse du mélange. En revanche, l'augmentation de la durée du chauffage et donc de la Vp, aux températures prescrites conduit systématiquement aux phénomènes de prise en masse de la matière.

En d'autres termes, le compromis température et durée de chauffage décrit dans ce document est totalement incompatible avec un traitement de gros volume requérant un temps de séjour de la matière au sein de l'installation largement supérieur aux durées prescrites de 31 et 60 minutes.

En effet, dans l'hypothèse où l'on équipe une cuve de 500 kg d'une conditionneuse dont la cadence est de 10 coups par minute, le remplissage de pots de 500 grammes prendra 100 minutes. En travaillant à 75°C sur une telle durée, on observe immanquablement des phénomènes de coagulation de l'oeuf et de prise en masse du mélange. En outre, la moindre panne du système de dosage, pompe etc..., pendant seulement quelques minutes peut provoquer la prise en masse définitive de la composition dans la cuve et la rendre inutilisable.

Le problème que se propose de résoudre l'invention est donc de mettre au point un procédé de pasteurisation d'un mélange essentiellement liquide, à base de blanc d'oeuf au moins, et éventuellement d'oeuf entier, qui puisse être conduit à l'échelle industrielle, c'est-à-dire indépendamment de toutes considérations relatives à la durée du chauffage, et permettant d'atteindre une Vp d'une valeur de 100, au moins.

Ainsi, l'invention propose un procédé de pasteurisation d'un mélange non sucré, essentiellement liquide, comprenant au moins un milieu liquide et au moins du blanc d'oeuf, selon lequel on chauffe ledit mélange à une température de pasteurisation comprise entre 67 et 71,5°C, pendant une durée suffisante permettant d'obtenir une valeur pasteurisatrice au moins égale à 100. On a en effet observé que dans les fourchettes de températures indiquées, la durée du chauffage au delà de la période nécessaire pour atteindre une Vp d'une valeur de 100, peut être poursuivie de manière illimitée et ce, sans prise en masse du mélange.

Ce procédé est très avantageux, car la durée de chauffage devenant illimitée, la valeur de Vp peut être augmentée bien au-delà de la valeur de 100, pour produire des mélanges possédant une durée de vie très supérieure à celle des mélanges obtenus par les procédés de pasteurisation connus.

En d'autres termes, l'invention consiste à avoir sélectionné une plage de températures réduite comprises entre 67 et 71,5°C, pour le mélange non sucré, qui de façon tout à fait surprenante permet d'obtenir des valeurs pasteurisatrices très élevées, supérieures à 100, correspondant à de longues durées de chauffage, respectivement d'au moins 200 minutes (pour 67°C) et 70 minutes (pour 71,5°C), sans pour autant conduire à une prise en masse du mélange.

En outre et surtout, le Demandeur a constaté que le mélange pouvait être chauffé à ces températures sur une durée illimitée permettant non seulement de s'affranchir de tout risque de prise en masse en cas de panne du système mais également d'obtenir des valeurs pasteurisatrices très élevées et donc une augmentation significative de la durée de vie des produits. Ainsi par exemple, sur une durée de 200 minutes, on obtient des valeurs pasteurisatrices respectivement égales à 90 (pour 67°C) et 283 (pour 71,5°C) sans dénaturation. Pour une température inférieure à 67°C, le procédé devient industriellement inintéressant dans la mesure où la durée de chauffage pour obtenir une valeur pasteurisatrice égale à 100 est très longue, par exemple d'au moins 4 heures pour une température de 66°C. Dans le cadre d'un procédé industriel, le mélange est pasteurisé dans une cuve et doit rapidement être transféré, de manière aseptique, dans une cuve de conditionnement afin de libérer la cuve de pasteurisation pour un nouveau cycle. Il est donc important dans ce cas que la durée de pasteurisation doit être aussi courte que possible.

Dans une forme de réalisation avantageuse du procédé, la température de pasteurisation est comprise entre 68°C et 71°C.

On fournit ci-après, à titre d'illustration, un extrait du tableau de détermination d'une valeur de Vp. Pour obtenir une valeur de Vp, on multiplie la valeur figurant dans le tableau pour une température donnée par la durée de chauffage en minutes.

**DETERMINATION DE LA VALEUR PASTEURISATRICE (EXTRAIT)**

| **°C** | **DIZIEMES DE DEGRES** | | | | | | | | | |
|---|---|---|---|---|---|---|---|---|---|---|
| | **0** | **1** | **2** | **3** | **4** | **5** | **6** | **7** | **8** | **9** |
| **67** | **0,501** | **0,513** | **0,525** | **0,537** | **0,549** | **0,562** | **0,575** | **0,589** | **0,603** | **0,617** |
| **68** | **0,631** | **0,646** | **0,661** | **0,676** | **0,692** | **0,708** | **0,724** | **0,741** | **0,759** | **0,776** |
| **69** | **0,794** | **0,813** | **0,832** | **0,851** | **0,871** | **0,891** | **0,912** | **0,933** | **0,955** | **0,977** |
| **70** | **1,000** | **1,023** | **1,047** | **1,072** | **1,096** | **1,122** | **1,148** | **1,175** | **1,202** | **1,230** |
| **71** | **1,259** | **1,288** | **1,318** | **1,349** | **1,380** | **1,413** | **1,445** | **1,479** | **1,514** | **1,549** |
| **72** | **1,585** | **1,622** | **1,660** | **1,698** | **1,738** | **1,778** | **1,820** | **1,862** | **1,905** | **1,950** |
| **73** | **1,995** | **2,042** | **2,089** | **2,138** | **2,188** | **2,239** | **2,291** | **2,344** | **2,399** | **2,455** |
| **74** | **2,512** | **2,570** | **2,630** | **2,692** | **2,754** | **2,818** | **2,884** | **2,951** | **3,020** | **3,090** |
| **75** | **3,162** | **3,236** | **3,311** | **3,388** | **3,467** | **3,548** | **3,631** | **3,715** | **3,802** | **3,890** |
| **76** | **3,981** | **4,074** | **4,169** | **4,266** | **4,365** | **4,647** | **4,571** | **4,677** | **4,786** | **4,890** |
| **77** | **5,012** | **5,129** | **5,248** | **5,370** | **5,495** | **5,623** | **5,754** | **5,888** | **6,026** | **6,166** |
| **78** | **6,310** | **6,457** | **6,607** | **6,761** | **6,918** | **7,079** | **7,244** | **7,413** | **7,586** | **7,762** |
| **79** | **7,943** | **8,128** | **8,318** | **8,511** | **8,710** | **8,913** | **9,120** | **9,333** | **9,550** | **9,772** |

On comprend selon l'invention, un mélange essentiellement liquide, comme un mélange liquide, de densité variable, pouvant contenir des constituants solides tels que les ingrédients nécessaires à l'obtention d'une garniture de tarte telle que quiche...

Dans une forme de réalisation particulière, le mélange non sucré, essentiellement liquide, est salé. Il contient par exemple des ingrédients salés notamment choisis parmi des lardons, du jambon, du poisson et des légumes...

S'agissant des mélanges sucrés à base de blanc d'oeuf, et éventuellement d'oeuf entier, le Demandeur a constaté que, de façon tout à fait surprenante, et toujours pour résoudre le même problème technique, qui est celui de pasteuriser indépendamment de toutes considérations relatives à la durée de chauffage, la température de pasteurisation pouvait atteindre jusqu'à 85°C et ce, sans limitation de durée.

Dès lors, l'invention concerne également un procédé de pasteurisation d'un mélange sucré, essentiellement liquide, comprenant au moins un milieu liquide et au moins du blanc d'oeuf, qui se caractérise en ce qu'on chauffe ledit mélange à une température comprise entre 67 et 85° C, pendant une durée suffisante permettant d'obtenir une valeur pasteurisatrice au moins égale à 100. Dans cette gamme de températures, la durée du chauffage au delà de celle nécessaire à l'obtention d'une Vp d'une valeur de 100, devient illimitée et ce, sans prise en masse du mélange.

Dans une forme de réalisation avantageuse, la température de pasteurisation est comprise entre 67 et 75°C.

On entend par mélange sucré, un mélange dans lequel l'apport de sucre est fait directement, ou indirectement, par l'introduction d'ingrédients sucrants, par exemple.

Selon une autre caractéristique de l'un des deux procédés de pasteurisation ci-dessus, le mélange liquide est avantageusement agité pendant toute la durée de la pasteurisation, et ce de sorte à homogénéiser la composition.

Dans une forme de réalisation avantageuse, le milieu liquide est choisi parmi l'eau, le lait, la crème et leurs mélanges.

Comme dit précédemment, le mélange à pasteuriser peut ne comprendre que du blanc d'oeuf, ou du blanc et du jaune d'oeuf, et notamment l'oeuf entier.

Par ailleurs, le blanc d'oeuf ou l'oeuf entier représente entre 5 et 90 % en poids du mélange liquide, avantageusement entre 10 et 70 %, de préférence entre 15 et 40 %.

Selon diverses variantes de mise en oeuvre d'un procédé de pasteurisation de l'invention, la pasteurisation peut être effectuée à n'importe quel stade de la fabrication du mélange. Ainsi, elle peut intervenir avant ou après l'introduction de tout ou partie des ingrédients salés ou sucrés dans ledit mélange. La pasteurisation peut aussi être réalisée avant ou après le conditionnement du mélange. Ainsi, elle peut être effectuée directement dans la cuve dans laquelle le mélange est agité ou dans l'emballage dans lequel le mélange est conditionné. Dans tous les cas, le mélange avant ou après conditionnement est refroidi après chauffage.

Comme déjà dit, le procédé de pasteurisation peut être mis en oeuvre pour la fabrication de garnitures pour tartes, notamment pour tartes soit salées, soit sucrées ou encore pour flans ou analogues.

L'invention concerne également le mélange essentiellement liquide, comprenant au moins du blanc d'oeuf et éventuellement du jaune d'oeuf, non sucré ou sucré, susceptible d'être obtenu par le procédé respectivement ci-avant décrit.

Un tel mélange présente une valeur pasteurisatrice élevée, au moins égale à 100.

L'invention et les avantages qui en découlent ressortiront mieux des exemples de réalisation suivants.

### Exemple 1 : Fabrication d'une garniture salée

Dans une cuve hermétique à double paroi de 400 litres, équipée d'un bras mélangeur, on chauffe un mélange liquide constitué de :
- Oeuf 33% (en poids par rapport au poids du mélange final)
- Crème 14%
- Lait 53%
auquel on ajoute des ingrédients salés du type lardons, jambon.

On chauffe le mélange obtenu à une température de 71°C tout en agitant à une vitesse de 30 tours/minute pendant 80 minutes permettant d'obtenir une Vp de 100. Une fois la Vp de 100 atteinte, on maintient le chauffage et l'agitation pendant 360 minutes, avec des contrôles toutes les 30 minutes. On n'observe aucune prise en masse du produit, ni de coagulation de l'oeuf tout au long du procédé.

Lorsque la Vp de 100 est atteinte, on transfère 300 kg de mélange dans des emballages au moyen d'une conditionneuse, dont la cadence est de 10 coups par minute. Le remplissage de pots de 300 grammes prend 100 minutes.

En d'autres termes, le mélange introduit dans le dernier pot présente une valeur pasteurisatrice de 226.

Les emballages sont ensuite soumis à une étape de refroidissement, puis maintenus à 3°C. La durée de conservation à cette température est d'au moins 35 jours. En effet, au 35^{ème} jour, la flore totale aérobie mésophile est inférieure à 1000 germes/gramme (norme NF V 08051).

On observe par ailleurs que non seulement le produit reste liquide, mais qu'en outre, les propriétés fonctionnelles de l'oeuf restent intactes.

### Exemple 2

On répète l'exemple 1, mais à une température de 67°C. La valeur pasteurisatrice de 100 est obtenue au bout de 200 minutes. Le maintien du chauffage pendant 360 minutes avec des contrôles toutes les 5 minutes ne révèle aucune prise en masse du produit. La durée de conservation est d'au moins 35 jours, la flore totale aérobie mésophile à cette date étant inférieure à 1000 germes par gramme (norme NF V 08051).

### Exemple 3

On répète l'exemple 1, mais à une température de 72°C. Après 180 minutes de chauffage à cette température, on observe le prise en masse du mélange.

### Exemple 4 : Préparation d'une garniture sucrée

On prépare dans une cuve double paroi de 400 litres équipée d'un bras mélangeur une garniture comprenant
- Oeuf 38% (en poids par rapport au poids du mélange final)
- Sucre 31%
- Lait 25%
- Citron 6%
dans les mêmes conditions que dans l'exemple 1, mais à une température de 75°C.

On chauffe tout en agitant à une vitesse de 30 tours/minute le mélange à une température de 75°C pendant 23 minutes, permettant d'obtenir une valeur pasteurisatrice égale à 100. On maintient le chauffage et l'agitation à cette température pendant 360 minutes avec des contrôles toutes les 30 minutes. Aucune prise en masse n'est observée à l'issue des 360 minutes de chauffage.

Lorsque la Vp de 100 est atteinte, on transfère 300 kg de mélange dans des emballages au moyen d'une conditionneuse, dont la cadence est de 10 coups par minute. Le remplissage des pots de 300 grammes prend 100 minutes.

En d'autres termes, le mélange introduit dans le dernier pot présente une valeur pasteurisatrice de 416.

Les emballages sont ensuite soumis à une étape de refroidissement, puis maintenus à 3°C. La durée de conservation de la garniture est d'au moins 63 jours, la flore totale aérobie mésophile à cette date étant inférieure à 1000 germes par gramme (norme NF V 08051).

On observe par ailleurs que non seulement le produit reste liquide, mais qu'en outre, les propriétés fonctionnelles de l'oeuf restent intactes.

L'invention et les avantages qui en découlent ressortent bien de la description.

On note en particulier la possibilité d'augmenter sans limitation la durée du chauffage à une température comprise entre 67 et 71,5° C, et même 85° C pour les mélanges sucrés permettant de travailler sur de gros volumes de matière, et ce, tout en augmentant la durée de la conservation du produit.

## Revendications

1. Procédé de pasteurisation d'un mélange non sucré, essentiellement liquide, comprenant un milieu liquide et au moins du blanc d'oeuf, **caractérisé en ce qu'**on chauffe ledit mélange à une température de pasteurisation comprise entre 67 et 71,5°C, pendant une durée suffisante, permettant d'obtenir une valeur pasteurisatrice au moins égale à 100.

2. Procédé selon la revendication 1, **caractérisé en ce que** la température de pasteurisation est comprise entre 68 et 71°C.

3. Procédé selon la revendication 1 ou 2,
**caractérisé en ce que** le mélange essentiellement liquide est salé.

4. Procédé selon la revendication 3, **caractérisé en ce que** le mélange comprend des ingrédients salés choisis parmi des lardons, du jambon, du poisson et des légumes.

5. Procédé de pasteurisation d'un mélange sucré, essentiellement liquide, et comprenant un milieu liquide et au moins du blanc d'oeuf, **caractérisé en ce qu'**on chauffe ledit mélange à une température comprise entre 67 et 85°C, pendant une durée suffisante permettant d'obtenir une valeur pasteurisatrice au moins égale à 100.

6. Procédé selon la revendication 5, **caractérisé en ce que** la température de pasteurisation est comprise entre 67 et 75°C.

7. Procédé selon la revendication 1 ou 5,
**caractérisé en ce que** le mélange est agité pendant toute la durée dudit procédé.

8. Procédé selon la revendication 1 ou 5,
**caractérisé en ce que** le milieu liquide est choisi parmi l'eau, le lait, la crème et leurs mélanges.

9. Procédé selon la revendication 1 ou 5,
**caractérisé en ce que** le mélange comprend de l'oeuf entier.

10. Procédé selon la revendication 1 ou 5 ou 9, **caractérisé en ce que** le blanc d'oeuf ou l'oeuf entier représente entre 5 et 90 % en poids du mélange liquide, avantageusement entre 10 et 70 %, et de préférence entre 15 et 40 %.

11. Procédé selon l'une quelconque des revendications 1 à 10, **caractérisé en ce que** le mélange est pasteurisé, avant ou après conditionnement.

12. Mélange essentiellement liquide comprenant au moins du blanc d'oeuf, susceptible d'être obtenu par le procédé objet de l'une des revendications 1 à 11.

13. Utilisation du mélange objet de la revendication 12, comme garniture pour fond de tarte, flan ou analogue.
